**Europäisches Patentamt**

**European Patent Office**

**Office européen des brevets**

(19)

(11) Publication number : **0 538 415 B1**

(12)

# EUROPEAN PATENT SPECIFICATION

(45) Date of publication of patent specification :
27.09.95 Bulletin 95/39

(51) Int. Cl.$^6$ : **G06F 17/50**, G06F 15/80

(21) Application number : **91916804.7**

(22) Date of filing : **12.07.91**

(86) International application number :
**PCT/US91/04930**

(87) International publication number :
**WO 92/01993 06.02.92 Gazette 92/04**

(54) **A FLUID DYNAMICS PARALLEL PROCESSOR.**

(30) Priority : **12.07.90 US 555754**

(43) Date of publication of application :
**28.04.93 Bulletin 93/17**

(45) Publication of the grant of the patent :
**27.09.95 Bulletin 95/39**

(84) Designated Contracting States :
**AT BE CH DE DK ES FR GB GR IT LI LU NL SE**

(56) References cited :
**EP-A- 0 228 915**
**PROCEEDINGS OF CONPAR CONFERENCE
PAPERS : PLENARY SESSIONS AND STREAM
A MANCHESTER SEPTEMBER 12-16 1988
BRITISH COMPUTER SOCIETY PARALLEL
PROCESSING SPECIALIST GROUP GB pages
175 - 185; A.PEREZ ET AL: 'OUPPI-1,A SIMD
COMPUTER USING INTEGRATED PARALLEL
PROCESSORS'**

(56) References cited :
**COMPLEX SYSTEMS vol. 1, no. 4, August 1987,
US pages 649 - 707; U.FRISH ET AL: "LATTICE
GAS HYDRODYNAMICS IN TWO AND THREE
DIMENSIONS"**
**Proceedings of the Workshop on Discrete
Kinetic Theory, Lattice Gas Dynamics and
Foundations of Hydrodynamics, Torino, Italy,
Sept. 20-24, 1988, World Scientific Publishing
Co. Pte. Ltd., pages 409-418**

(73) Proprietor : **MASSACHUSETTS INSTITUTE OF
TECHNOLOGY**
**77 Massachusetts Avenue**
**Cambridge, MA 02139 (US)**

(72) Inventor : **MOLVIG, Kim**
**15 Woodward**
**Reading, MA 01867 (US)**
Inventor : **PAPADOPOULOS, Gregory, M.**
**20 Chandler Road**
**Burlington, MA 01803 (US)**

(74) Representative : **Driver, Virginia Rozanne et al**
**Page White & Farrer**
**54 Doughty Street**
**London WC1N 2LS (GB)**

EP 0 538 415 B1

## Description

Background of the Invention

A fluid is generally defined as any substance that can flow. Fluids encompass gases, liquids and combinations of gases and liquids. The field of fluid dynamics attempts to explain and characterize the behavior of fluids. Conventionally, such characterization has been through equations. The use of equations to system large and complex physical environments is difficult at least. Further, approximations inherent in processing the equations can cause significant errors.

A fundamental view of fluid dynamics is that fluids are comprised of particles. A corollary of this view is that behavior of the fluids can be explained from the behavior of the particles that make up the fluid. A vast majority of particles in the fluid are constantly in motion. The particles move undisturbed until they collide with other particles. Such a view of particles has given rise to a simulation approach in which the particles are viewed as traveling on a lattice and are processed individually. However, such a discrete system suffers several discreteness artifacts not found in real fluids.

The following documents all discuss systems for simulating fluid flow:

COMPLEX SYSTEMS, Volume 1, No. 4, August 1987, US, pages 649-707.

PROCEEDINGS OF CONPAR 1988, CONFERENCE PAPERS: PLENARY SESSIONS AND STREAM "A", Manchester, September 12-16, 1988, British Computer Society - Parallel Processing Specialist Group, GB, pages 175-185.

EP-A-0 228 915.

These documents discuss the provision of flow simulation using particle representations of a set of particles for each of a plurality of sites of a lattice. Collision rules are used to process the particle representations to provide modified representations which are then processed across the lattice to generate new representations which reflect movement of particles in the lattice to new sites. None of these documents properly discuss the provision of particle representations which represent a plurality of energy states including plural energy states of moving particles. A publication of the proceedings of the workshop on Discrete Kinetic Theory, Lattice Gas Dynamics and Foundations of Hydrodynamics at Torino, Italy, September 20-24, 1988, describes a fluid simulation system which does take into account energy states of moving particles. In that system, collision rules are used which include rules reflecting a transfer of energy between particles. However, the proposal made therein for processing the particle representations by summing individual processes applied to the initial particle representation is inoperable.

The present invention seeks to provide a fluid simulation system and a method of simulating a fluid which provides a quick, accurate and technically feasible simulation.

According to one aspect of the present invention there is provided a data processor for processing data of a plurality of sites of a lattice to simulate an interactive physical process across the lattice, the data processor comprising: storage means arranged to store particle representations of a set of particles associated with each of a plurality of sites of a lattice, the particle representations including a like set of bits representing particles at a site of the lattice; input means coupled to said storage means for receiving initial values of said particle representations; interaction processing means coupled to receive from said storage means the initial particle representations associated with each lattice site and to generate therefrom, in a time step, modified particle representations according to collision rules; and move processing means operable to generate from said modified particle representations new initial particle representations which reflect movement of particles in the lattice to new sites and to cause said new particle representations to be stored in said storage means, whereby the next step taken by the interactive processing means is carried out on said new initial values, characterised in that the particle representations identify for each particle one of a plurality of possible energy states including states of moving particles and in that the storage means holds, at the beginning of a multicycle time step, an initial particle representation to be processed; and further characterised by selection means for selecting from the bits of the received particle representation different permutations of bits in successive cycles within a time step and logic means for carrying out combinational logic on those bits in each cycle according to said collision rules which include rules which reflect a transfer of energy between particles of different energy states, wherein bits selected for processing in each cycle may include bits modified by processing in prior cycles.

According to another aspect of the present invention there is provided a method of processing data of a plurality of sites of a lattice to simulate an interactive physical process across the lattice, the method comprising: storing particle representations of a set of particles associated with each of a plurality of sites of a lattice, the particle representations including a like set of bits representing particles at a site of the lattice; providing initial values of said particle representations; processing, for each lattice site, the initial particle representations to generate therefrom, in a time step, modified particle representations according to collision rules; generating from said modified particle representations new initial particle representations which reflect movement of particles in the lattice to new sites and storing said new particle representations, whereby the next processing step is carried out on said new initial values, characterised in that the particle representations identify for each particle one of a plurality of possible energy states including states of moving particles and in that the time step is a multicycle time step and further characterised by the steps of selecting from the bits of the initial particle representation to be processed different permutations of bits in successive cycles within a time step and processing those bits in each cycle according to said collision rules which include rules which reflect a transfer of energy between particles of different energy states, wherein bits selected for processing in each cycle may include bits modified by processing in prior cycles.

Preferably, the logic means provides for greater rates of energy transfer in one direction than in a reverse direction. Specifically, the number of energy transfer collisions and inverse transfer collisions allowed may be regulated to insure that the system exhibits Gallilean invariance without dynamic pressure anomaly over a range of densities and temperatures.

The collisions for many sites may be performed in parallel processors. The collision rules conserve mass, momentum and energy. Preferably, the particle representations define particles of different four-dimensional velocities. The particles may move along four-dimensional face-centered hypercubes projected into three-dimensional space. The processors may provide for movement of particles on a non-uniform grid.

The lattice structure simplifies processing by forcing the particles to reside at discrete locations. The system relies on combinational logic to process simple collision rules, so no floating point arithmetic is required, and the errors inherent in such calculations due to approximation are avoided. By providing plural particle energy levels and collisions which result in energy transfer between particles, the discreteness artifacts which result from the discrete nature of the process can be eliminated.

The particle representations are termed herein a state vector. The state vector is a set of bits, each bit representing a particle of a particular energy and a particular direction of movement at the site. In the preferred system, a sequencer selects like bits of a plurality of sites of the lattice together and combinational collision logic processes a common collision rule on all selected bits simultaneously. The combinational logic need only perform a collision by setting state bits where the particle representation indicates that all colliding particles are present and that there are holes where all resultant collided particles are to be present in the second particle representation. The combinational logic may receive masking inputs to prevent performance of certain collision rules; such masking inputs easily provide for the different rates of energy transfer. Other masking inputs may force a boundary rule and assist in implementation of the non-uniform grid.

Brief Description of the Drawings

Figures 1a is a projection of the energy 1 sublattice of the four dimensional face centered hypercubic lattice onto the three dimensional lattice where particles reside.

Figure 1b is a projection of the energy 2 sublattice of the four dimensional face centered hypercubic lattice on to the three dimensional lattice where particles reside.

Figures 2a and 2b list the possible velocity vectors that the particles at any given lattice site may assume.

Figures 3a and 3b list the possible particle pairings for the first equivalence class.

Figures 4a and 4b illustrate how the net velocity vectors of the second equivalence class can be found by applying the Pythagorean Theorem.

Figure 5 presents two examples of the degeneracy of the second equivalence class.

Figure 6 illustrates a single example of the degeneracy of the third equivalence class.

Figure 7 is a table summarizing the equivalence classes.

Figures 8a, 8b and 8c depict examples of particle collisions for the respective first three equivalence classes.

Figures 9a and 9b show forward and inverse energy transfer collisions, respectively.

Figure 10 is an illustration of the bits in a state vector.

Figure 11 is an illustration of a processing chip of one embodiment of the invention.

Figure 12 is an enlarged view of a pipeline element of Figure 11.

Figure 13 is an example of the overlapping strategy employed to remove contaminated data.

Figure 14 depicts the mapping of a volume of fluid into the processing arrays.

Figure 15 is a block diagram of an alternative processor embodying the invention.

Figure 16 is a schematic illustration of the state vector data for a 4x4x4 block of sites processed in the ALU of Figure 15.

Detailed Description of Preferred Embodiments

The present invention provides a method and apparatus for solving particle flow problems such as in fluid dynamics by effectively simulating fluid behavior with a special purpose data processing system. Moreover, the particle flow problems are solved using purely binary logic. As such, the system does not suffer from the drawbacks of floating point arithmetic computation (e.g. error attributable to decimal place roundoff).

A volume of fluid consists of a number of particles such as molecules distributed throughout a volume. The particles in the volume move in many different directions, and a number of collisions occur between the particles. The system captures the physical behavior of the volume of fluid within practical computational limits by imposing a three dimensional (3-D) lattice structure onto the volume of fluid. A portion of this three dimensional cubic lattice 10 is shown in Figure la. The lattice structure is of an appropriate size to cover the entire volume of fluid. Particles of the fluid may only reside at lattice sites (i.e. vertices) of the lattice. Movement of the particles, however, is not constrained to be along the edges of the three dimensional lattice; rather particles are only constrained to reside at a lattice site for any discrete time step.

During each time step, particles which reside at a site are allowed to collide. The states of the particles thus change according to predetermined collision rules. Despite the discreteness of the lattice structure, it has been determined that true fluid flow can be simulated without discreteness artifacts by allowing multiple energy levels of the particles, by proper selection of the committed directions of travel of the particles along the lattice structure and by proper selection of collision rules. Proper direction of movement requires that the particles be considered to move in a four-dimensional space. The size and orientation of the lattice structures vary for each energy level. In selecting the lattices, the sum over the directions of the four-fold tensor product of the unit vectors in each energy level must form a purely isotropic rank four tensor. This rank four isotropy property must hold in each energy level separately. All integer energy levels exist and have this property. The displacement/velocity vectors of the integer energy levels 1, 2, 3 and 4 are described below.

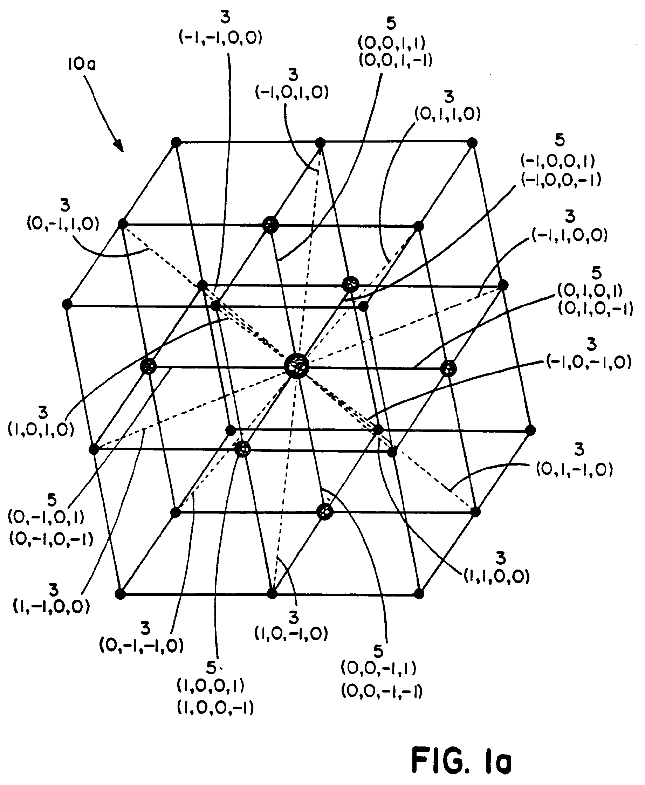

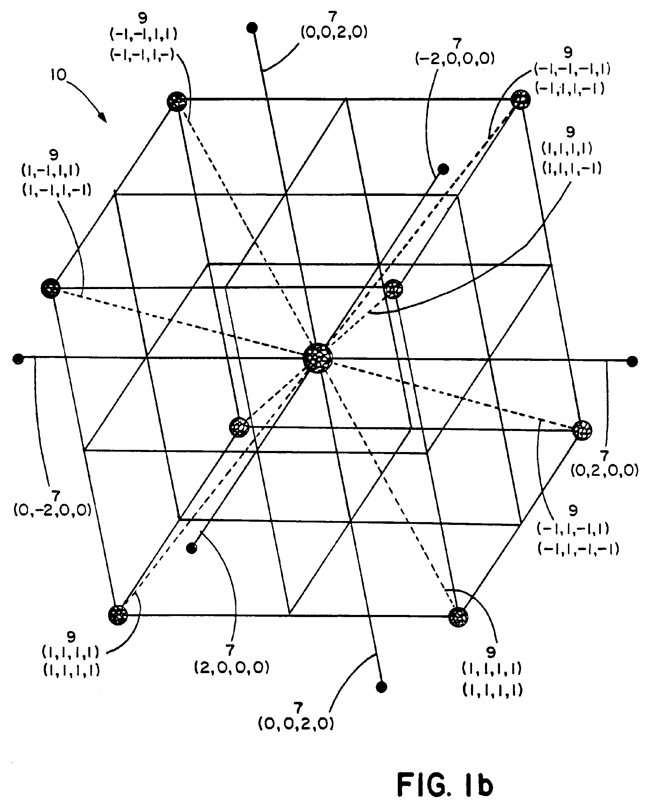

The energy 1 and 2 particles move in a four-dimensional face-centered hypercubic (FHCH) lattice structure. The movement of each particle projects into the three-dimensional lattice of Figures 1a and 1b. Figure 1a illustrates the projection of particle movement of a first energy level, and Figure 1b illustrates the projection of movement of particles of a second energy level onto the same three-dimensional lattice.

The FCHC symmetry for a single speed of particle is described in B. Hasslacher et al., Complex Systems (1987). Hasslacher et al. did not describe a FCHC symmetry for multiple moving particle energies such as embodied in the present invention. Furthermore, unlike the present invention, they did not propose energy-exchange collisions between moving particles. These changes will be described in more detail below.

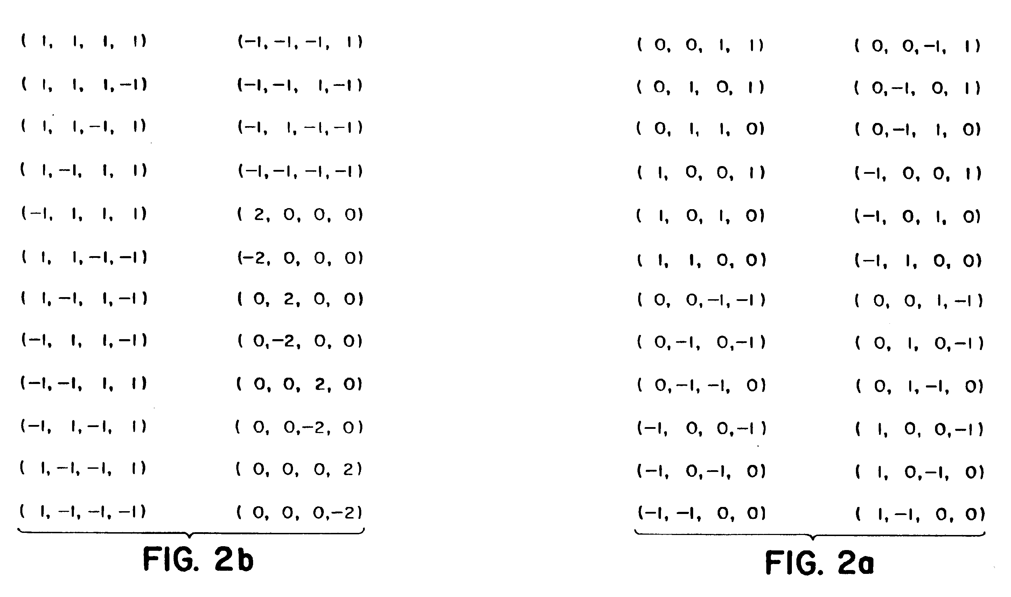

Movement of the particles in the four dimensions can be represented by vectors $(x, y, z, w)$. Figure 2a illustrates the movement vectors of the first energy level which project into three dimensions as illustrated in Figure 1a. The movement vectors of the particles of the second energy level are presented in Figure 2b and project into the three-dimensional lattice as illustrated in Figure 1b. The vectors presented in Figures 2a and 2b represent the displacement of a particle in each of the four dimensions in one time step and are thus the velocity vectors of displacement per time step. The energy 1 vector of figure 2a can be seen as permutations of $(\pm1,\pm1,0,0)$ where the two $\pm1$ values may be shifted to any of the four dimensions. Similarly, the energy 2 vectors of Figure 2b can be seen as permutations of $(\pm1,\pm1,\pm1,\pm1)$ and $(\pm2,0,0,0)$. Although the implementations presented here utilize only three energy levels, 0, 1 and 2, additional energy levels may be represented in the system. For example, the third energy level would be permutations of $(\pm2,\pm1,\pm1,0)$, and a fourth level energy would be permutations of $(\pm2,\pm2,0,0)$.

The energy of each particle is equal to one half the sum of the squares of the units of displacement in each direction. Thus, the energy of the first level is $\frac{1}{2}(1+1) = 1$, and that of the second level is $\frac{1}{2}(1+1+1+1) = \frac{1}{2}(4) = 2$. Similarly, the integer energy values of the third and fourth levels are 3 and 4. The resultant velocities of the velocity vectors can be computed from the Pythagorean Theorem as the square root of the sum of the squares of the displacements in each direction. Thus, for the energy 1 particles the velocity is $\sqrt{1 + 1} = \sqrt{2}$, and for energy 2 particles the velocity resultant is $\sqrt{4} = 2$.

As can be seen from Figures 2a and 2b, there are 24 possible particles in each of energies levels 1 and 2, each particle having a different direction of movement in four dimensions. Energy 3 particles may move in 96 directions and energy 4 particles may move in 24 directions. In the implementations described here, in addition to the 24 directions of energy 1 particles and 24 directions of energy 2 particles, six rest particles are allowed to remove the discreteness artifacts as described below, for a total of 54 possible particles at each side of the three-dimensional lattice of Figure 1a. As discussed in detail below, with each time step selected pairs of those particles are allowed to collide; pairs of colliding particles at each site generate pairs of collided particles.

4

With reference to Figure 1a, for each lattice site, there are 24 directions of travel 3 and 5 that a particle may assume. These directions are labelled nearest neighbor directions because the velocity vectors they represent point to a FCHC nodes denoted as nearest neighbors. The nearest neighbor nodes are located $\sqrt{2}$ units away from the lattice site in the four dimensional space. In addition, there are 24 other directions of travel 7 and 9 (in Figure 1b) that a particle may assume. Such FCHC nodes are denoted as next nearest neighbors. These nodes are located 2 units from the lattice site. A particle resident at a given 3-D lattice site may travel towards a FCHC nearest neighbor, a FCHC next nearest neighbor or remain stationary in a single time step.

The velocity vectors directed towards nearest neighbors that have no components in the fourth dimension (i.e. the last coordinate position is zero) are the vectors 3 in Figure 1a. These vectors are represented as dotted lines. Also shown in Figure 1a are the velocity vectors 5 which have components in the fourth dimension. These types of vector are represented by solid lines running from the central node to the surrounding nodes. Each said line represents a vector pair for each node because the component of the vector in the fourth dimension (i.e. a 1 or -1 in the last coordinate position) cannot be seen in three dimensions. As such the two velocity vectors project onto three dimensions as the same line.

Figure 1b provides a similar illustration of the velocity vectors for energy 2 particles. The velocity vectors 7 existing solely in three dimensions are, however, represented by solid lines; whereas, the velocity vectors 9 that have components in the fourth dimension are represented by broken lines running from the central node. In addition, the vectors (0,0,0,2) and (0,0,0,-2) are not shown in Figure 1b because they have no components in the other three dimensions, and accordingly, they have no projection into the three dimensions.

The eight vectors (+2,0,0,0) of energy 2 particles together form a hyperoctahedron. The 16 velocity vectors $(\pm 1,\pm 1,\pm 1,\pm 1)$ together form a hypercube. The hyperoctahedron and the hypercube formed by the respective velocity vectors in combination form a generic FCHC polytope. As such, the links connecting the next nearest neighbors have a FCHC geometry. In fact, all additional speeds for higher integer energies have the required rank four isotropy, though not necessarily the FCHC lattice structure. Therefore, this approach may be generalized for higher energies in addition to the present three.

The system operates in discrete time steps. For each discrete time step, two phases of activity are performed. In the first phase, any collisions that may and are caused to occur are performed. Once the collisions are performed, the particles are moved in the second phase. A particle will propagate undisturbed with its current speed and direction unless a collision occurs. A collision affects the velocity vectors of the colliding particles.

The collisions may be categorized into two varieties of collisions: adiabatic collisions and energy exchange collisions. Adiabatic collisions are the collisions that do not change the numbers of particles of each energy level and therefore do not change the heat content of the system. In the present embodiments, the only adiabatic collisions are self-collisions between particles of the same energy level. Self collisions are of two additional varieties: self collisions between energy 1 particles and self collisions between energy 2 particles. Energy exchange collisions, in contrast, are those collisions in which energy from one particle is transferred to another particle, as where two energy 1 particles collide to form an energy 2 particle and a stationary particle.

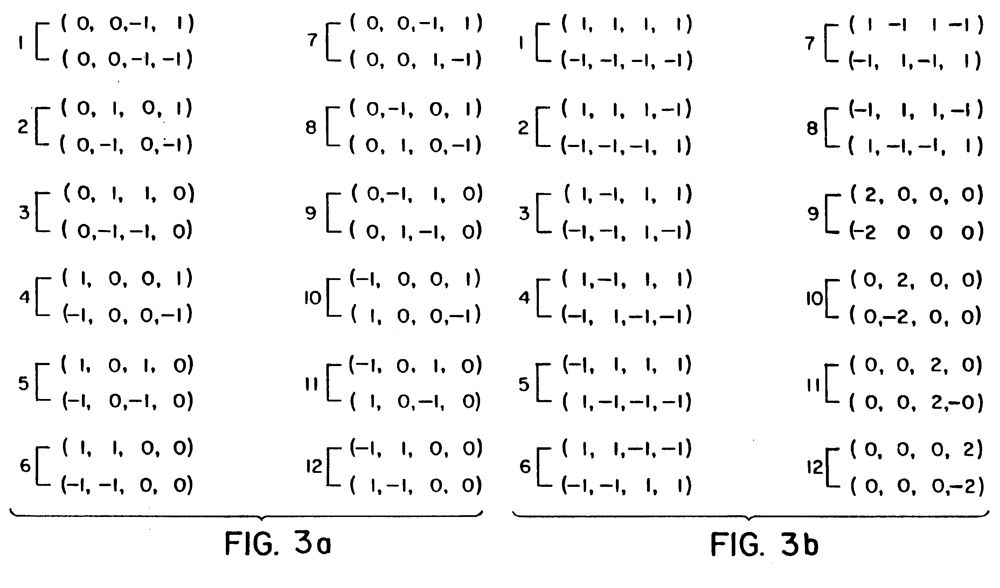

For purposes of clarity, both varieties of self collisions are described herein together. To better understand self collisions, it is best to first examine how particles may be paired. To obtain conservation of momentum and energy, it is necessary that the net velocity vector of a pair of collided particles resulting from a collision be equal to the net velocity vector of the colliding pair of particles. There are four classes of equivalence into which the particles of given energy may be paired. Each of these classes is characterized by the magnitude of the net velocity vector resulting from the summing of the velocity vectors of the particles being paired. The first equivalence class is for the pairs whose net velocity vectors have a magnitude of zero. For each energy of particles, there are 12 pairs of particles that when combined have a net velocity vector of zero. Such pairs of energy 1 particles are shown in Figure 3a and such pairs of energy 2 particles are shown in Figure 3b. The angle between the velocity vectors that are paired is 180°.

The zero net velocity vector exhibits a property known as degeneracy which implies that the zero velocity vector may be the product of any one of multiple (i.e. twelve) pairs of particles. This property is important for these collisions to conserve energy and momentum.

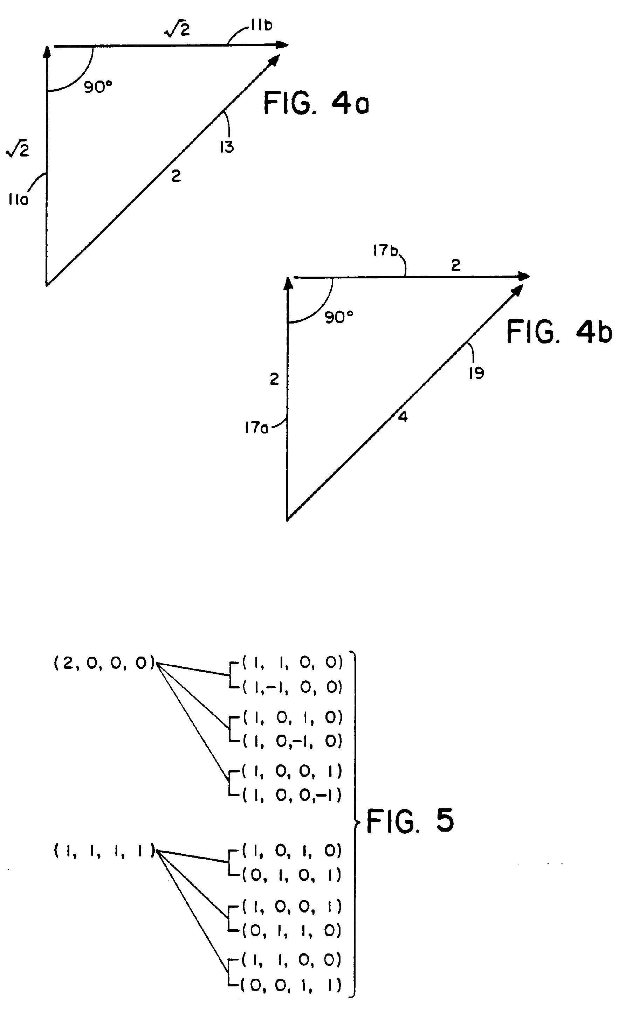

The second equivalence class consists of those pairs of particles that collide at an angle of 90°. For energy 1 particles in this equivalence class having a speed of $\sqrt{2}$, the magnitude of the net velocity vector of the pairs in this equivalence class is 2; for energy 2 particles in this equivalence class having a speed of 2, the net velocity magnitude of the pair is 4. These net velocity vector values may be confirmed by straightforward vector addition. In particular, to add two vectors, the two vectors 11a and 11b are placed head to tail such as shown in Figure 4a for an energy 1 pair of this equivalence class. The vectors 11a and 11b each have a length of $\sqrt{2}$. Their product is found by drawing a vector 13 from the tail of the first vector 11a to the head of the second vector 11b. Since, these three vectors 11a, 11b and 13 form a right triangle, the speed of vector 13 can be found by applying the Pythagorean Theorem. In particular, the speed (i.e. the length) of vector 13 equals the square root of the sum of the squares of the speeds (length) of the vectors 11a and 11b. Hence, the speed of vector 13 equals 2. Similarly, for energy 2 particles in this equivalence class, the speed of the net velocity vector 19 may be found to be 4 by applying the Pythagorean Theorem to the velocity vectors 17a and 17b which each have a speed of 2.

Each net velocity vector for this second equivalence class can be produced by 3 pairs of particles. As such, each net velocity vector has a degeneracy of 3. Figure 5 illustrates an example of the two sets of three pairings that may produce the net velocity vectors of (2,0,0,0) and (1,1,1,1), respectively, for energy 1 particles. Since, for energy 1 particles, there are 24 possible net velocity vectors whose magnitude is 2 (i.e., the net velocity vectors $(\pm1,\pm1,\pm1,\pm1)$, $(\pm2,0,0,0)$, $(0,\pm2,0,0)$, $(0,0,\pm2,0)$, $(0,0,0,\pm2)$), and there are 3 pairings that can result in each such net velocity vector (i.e., a degeneracy of 3), it follows that there are 24x3 or 72 pairings in the second equivalence class for each speed of particle.

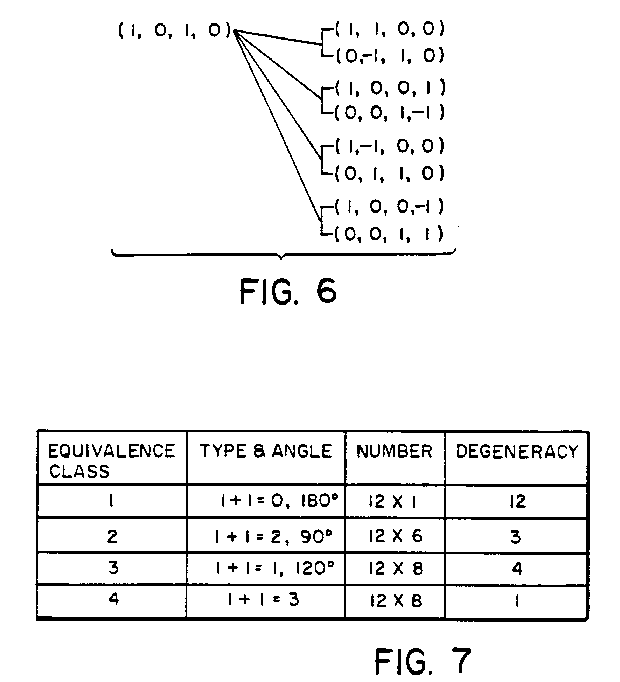

The third equivalence class is made of those pairs of particles which produce a net velocity vector having the same magnitude as each of the velocity vectors of the particles. For each of the 24 possible net velocity vectors, four pairs of particles can produce the net velocity vector. Accordingly, there are 24x4 or 96 particle pairs in the third equivalence class. An example for the net velocity vector (1,0,1,0) is shown in Figure 6. Particles paired in this equivalence class are separated by a 120° angle.

The fourth and final equivalence class comprises the remaining self collision pairs that do not fit into the first three classes. This class is comprised of 96 pairs of particles. Each net velocity vector has a unique pair of particles that produces it. As such, there is no degeneracy and there can be no collision to generate an equivalent pair of particles. Figure 7 is a table that summarizes the above discussion of the equivalence classes.

The first three equivalence classes constitute the pairings in which self-collisions are possible for particles on the FCHC. These three classes constitute 180 pairings out of the possible 276 pairings or 15/23 of the possible pairings. During the first phase of operation in one implementation, the system sweeps through all 180 pairings to perform a collision whenever possible. Whether a collision is performed is dictated by whether both particles of the pair are present at the 3-D lattice site or not. It is also dictated by whether the collided pair of particles resulting from the collision are not present. In this embodiment, to conserve particle mass exactly, output particles must not be produced that have the same velocity vector of existing particles. This condition can be relaxed by allowing more than one particle per state per site.

How collisions are performed can now be explained in view of the above discussion of the possible pairings of particles. For illustrative purposes only binary (i.e., two particle) plus spectator collisions will be discussed. Such binary collisions account for the majority of particle collisions that occur in real physical systems. The sequences of binary collisions allowed in the present invention aggregate to produce results equivalent to tertiary and higher order collisions. As such, this limitation to binary collisions is acceptable. Such collisions allow for spectator particles to reside at the lattice site so that the spectator particles do not undergo any change in state. It should nevertheless, be appreciated that the present invention is not limited to binary collisions, for other higher order collisions are equally viable.

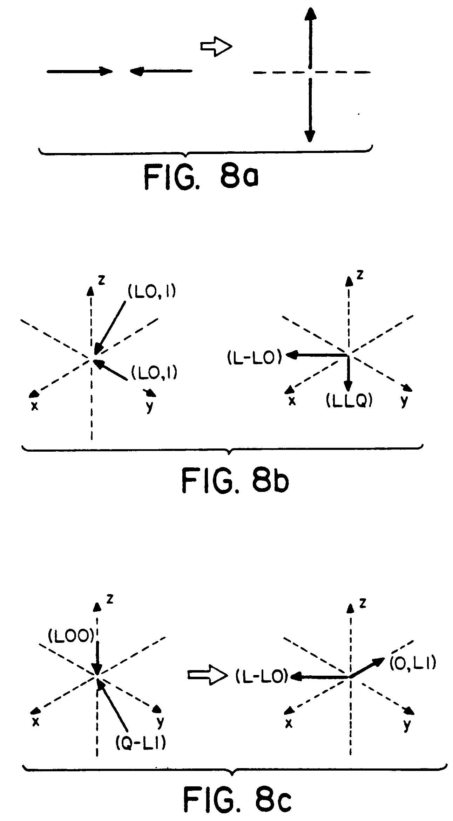

As was mentioned above, collisions can occur for the first three equivalence classes. Examples of such collisions for the respective equivalence classes are shown in Figures 8a, 8b and 8c. Each of these types of collisions exhibits conservation of energy, momentum and mass. Mass is conserved because the number of particles entering and leaving all collisions is the same. The conservation of momentum and energy is evident by comparing the velocity vectors of the particle pairs to be collided with the resulting velocity vectors for the particles after the collision. A cursory analysis indicates that the vector sum of the particle pairs prior to collision is equal to the vector sum of the particle pairs after collision. Since this is the only factor influencing momentum and energy that is not constant in the system and since this factor is conserved, it is apparent that the conservation laws hold exactly for the system in the collisions.

In a sequential processor, the collisions are performed by cycling through each of the possible particle pairings for each lattice site in iterative fashion. The system begins with the first equivalence class of particle pairings. The system looks at the first pairing in the first equivalence class to check to see whether both of the particles for the pairing are present or not. The presence of these particles can be summarized as a truth condition. If the truth condition indicates that both particles are present, the system proceeds.

The system knows the net velocity vector for each particle pairing. To ensure conservation of energy and momentum, the particles resulting from the collision must also share the same net velocity vector. For example, since there are three possible pairings that can generate any net velocity vector in the second equivalence class, the system knows that the particle pair resulting from the collision must be one of the other two pairings that can produce the same net velocity vector. Other particle pairings on the lattice cannot produce such a net velocity vector. The system can either randomly select one of these pairings to be the output or cycle through all pairings. Before the system can perform the collision, it must, however, first check a second truth condition.

The second truth condition indicates the availability of the selected output particle pair, also known as the hole pair. If both truth conditions hold true (i.e., particles are present and the hole pair is present), the collision is performed.

Once the collision is performed for the first pair or once the system determines that the collision cannot be performed, the system proceeds to the next particle pair as dictated by the index sequencing scheme. Processing of the energy 1 and energy 2 particles occurs in parallel. This processing continues until all particle pairs for the first equivalence class have been examined. Once this is completed for the first equivalence class, the pairings in the second equivalence class are examined, and, similarly, the pairings in the third equivalence class are examined.

The above description makes evident the role of the degeneracy in performing the collisions. In particular, the system selects one of the permutations of particle pairings within a degenerate group for a net velocity vector. Given that the fourth equivalence class does not have any degeneracy, it is impossible to conserve momentum with such collisions in that equivalence class. As such, the collisions are not performed.

Either a random number of collision permutations may be selected for each examination of a particle pair, or all of the possible permutations may be examined. In the latter approach, all possible events that can occur are attempted. As an example, suppose that a particle pair from the first equivalence class is being analyzed to determine whether to perform a collision. There would be eleven other particle pairs that could produce the same net velocity vector that the given particle pair produces. Thus, the system could choose at random any one of the eleven other pairings, if the random number approach was utilized. Under the alternative embodiment, however, each pairing would be selected in consecutive order to enable two possible collisions. By controlling these and all other collision rules, the viscosity of the fluid can be regulated.

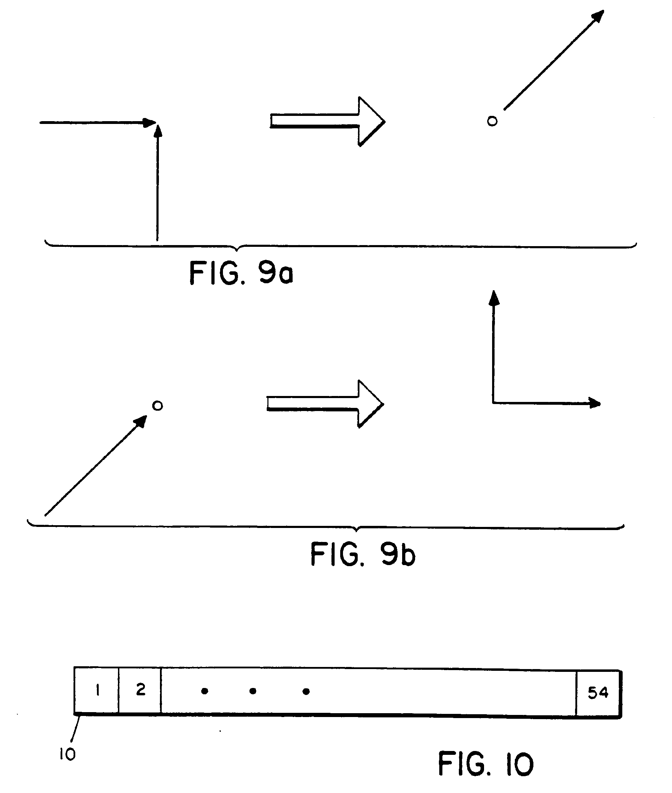

The other variety of collisions that are performed by the present invention are energy exchange collisions. Energy exchange collisions occur when two energy 1 particles collide to form an energy 2 particle and an energy 0 particle. A diagram of this type of collision is shown in Figure 9a. There are 72 possible pairings that bring about such a collision when the particles are present. In addition, the present invention also enables inverse energy exchange collisions (Figure 9b), wherein an energy 2 particle strikes a stopped particle to produce two energy 1 particles. These types of collisions are referred to as inverse energy collisions because they perform the exact opposite type of collision that the forward energy exchange collisions perform. The inclusion of energy exchange collisions with variable forward and inverse rates adds an additional degree of freedom to the system. As will be discussed below, the inclusion of this additional degree of freedom is important so that the system duplicates true fluid behavior.

Equivalence class 2 of the energy 1 particles also serves as the basis for energy transfer collisions. As can be seen in Figure 5, the net velocity vector of each pair of energy 1 particles is itself a group 2 velocity vector. Thus, the energy 2 velocity vector and a stationary particle together provide the same mass energy and momentum as the pair of energy 1 vectors. Such grouping can therefore define collision rules which transfer energy between particles. The energy of one energy 1 particle can be transferred to another energy 1 particle, resulting in an energy 2 particle and an energy 0 particle. Similarly, an energy 2 particle may strike an energy 0 particle resulting in two energy 1 particles.

The forward energy exchange collisions and the inverse (backward) energy exchange collisions are performed much in the same manner described above for the self collisions. In particular, possible collision groupings are determined to maintain constant net velocity vectors before and after collisions. The system looks at the first truth condition to determine whether the particles are present, and also looks at the second truth condition to determine whether the hole pair is present. If both truth conditions are true, the energy exchange collision (or the inverse energy exchange collision) is performed. As will be discussed below, the forward energy exchange collisions and the inverse energy exchange collisions are limited by a mask that is instituted in the system to affect the rate of such collisions.

Once the collisions have been performed, the particles are moved in the movement phase or operation. The details of how the movement is realized in hardware is given below.

The present invention is able to overcome the major problems suffered by prior art systems. The systems are discrete in that the particles are limited to discrete positions on a lattice. Such particles are not allowed to be continuously positioned throughout a volume as would generally be experienced in a true physical system. Three artifacts resulting from the discreteness are nonisotropy of the stress tensor, non-Gallilean invariance and a dynamic pressure anomaly.

The nonisotropy of a stress tensor implies that a lattice suffers mechanical shear stress. The fact that certain lattices exhibit isotropic stress is well known. See B. Hasslacher, P. Lallemand, Y. Pomeau, U. Frisch, D. d'Humieres and J.P. Rivet, _Complex Systems_, page 649 (1987), who illustrated isotropy of the stress tensor for particles traveling at a single speed along a FCHC symmetry without energy exchange collisions. Lattice symmetries for particle motion have been developed that do not exhibit such isotropic stress. Such lattices include the hexagonal lattice and the FCHC. So as to remove this artifact of discreteness, the present invention utilizes a four dimensional FCHC lattice and has rank four isotropy in all energy levels.

Non-Gallilean invariance refers to the Gallilean factor "g" having a value other than one. A value other than one indicates that the lattice gas fluid has a tendency to behave differently when moving at constant velocity than when at rest. This is primarily a consequence of the stationary lattice in which the fluid is imbedded and will generally lead to non-fluid behavior of the lattice gas.

The Galilean factor, g, appears in the momentum conservation equation, as shown below along with the other discreteness artifacts,

$$\rho(\frac{\partial}{\partial t}u+u \quad \nabla gu)=-\nabla (P-f\rho u^2)- \nabla P^{ANIS}+VISCOUS \ TERMS$$

Except for the three artifacts, indicated by arrows, this is the Navier-Stokes equation of fluid dynamics, with the mass density $\rho$, fluid velocity, u, and pressure, P, indicated. The present invention eliminates both the dynamic pressure anomaly term, $f\rho u^2$ and the anisotropic stress, $P^{ANIS}$, while maintaining g=1 throughout the dynamical range.

The final artifact is the dynamic pressure anomaly. Specifically, the pressure depends on the fluid velocity. The reason for this dependence is again a consequence of the lattice being at rest, and is somewhat related to the Gallilean invariance.

The problems of non-Gallilean invariance and the dynamic pressure anomaly are resolved by figuring the energy degree of freedom into the system. The Gallilean factor "g" is directly affected by the rate of the forward energy collisions and the rate of the inverse energy collisions. The rate of the forward and inverse energy collisions is selected so as to force "g" to be equal to 1 and, thus, force the system to exhibit Gallilean invariance.

The ratio of forward to inverse rates is determined theoretically by the Gallilean invariance condition, g=1, to ensure the proper equilibrium. Expressions are developed to give this rate ratio to very high accuracy. The ratio of forward to backward processes can be set to the required value to obtain Galilean invariance without the dynamic pressure anomaly. The pressure anisotropy is resolved by assuring that each energy level processes the rank four isotropy property.

As is evident from the above description of the collision process, the system is extremely computationally intensive. So as to make its use practical, the system is implemented on a special purpose parallel processing system. Central to operation of the system is the state vector 10 shown in Figure 10. The state vector 10 is comprised of 54 bits that may assume a value of 0 or 1. Each bit position is associated with a given particle selected from the 54 particles that may be present at any given lattice site. Hence, each bit position is associated with a given velocity vector for the associated particle. A 1 in the bit position indicates the presence of the particle, whereas a 0 indicates the absence of the particle. The number of bits in a state vector need not be limited to 54 bits; rather the number of bits is dictated by the number of energies and directions available. Thus, if different energies or different directions are used, or if more particles are allowed per state per site, a different bit length for the state vector may be chosen. In particular, for energy levels zero through four, a 169-bit state vector would be used.

In order to perform each collision rule, the appropriate bits representing the two colliding particles must be checked to confirm that the particles are present. Then, the bits representing the required holes must be checked; that is, it must be confirmed that the resultant collided particles from a collision are not already present in the state vector. When those two conditions are met, the collision is performed by removing the bits for the colliding particles and generating the bits for the collided particles in the state vector. This logic must be performed for each collision rule, the selected pairs of colliding and collided particles being in accordance with the pairing rules discussed above.

Two hardware architectures will be described for carrying out the collision rules and subsequent move operations. Each relies on combinational logic to perform the collision rules. With proper selection of the appropriate pairs of bits in a state vector, the combinational logic for each rule is as follows. For each pair of colliding velocity vectors, represented by bits $S_i$ and $S_j$, and corresponding pair of collided vectors, represented by bits $S_k$ and $S_l$, there is a forward collision rule which requires that $S_i$ and $S_j$ be in the state vector and that $S_k$ and $S_l$ be holes. Further, masking bits $M_F$ and $M_B$ are provided by a random number generator at the rates required for the forward and backward collisions. The rate for one direction may be set at unity. The collisions are only permitted where the bit $M_F$ or $M_B$ is set. Thus, the forward collision rule is:

$$R_F = (S_i \cdot S_j \cdot \overline{S}_k \cdot \overline{S}_l) \cdot M_F \quad (1)$$

For the same vector pairs, a backward collision rule may be defined as follows:

$$R_B = (\overline{S}_i \cdot \overline{S}_j \cdot S_k \cdot S_l) \cdot M_B \quad (2)$$

The masking bits $M_F$ and $M_B$ provide different rates of collision between the forward and backward energy transfer collisions.

Only one of the forward and backward rules or neither rule may be performed in any time step. Thus, the individual post collision state bits can be determined from the following logic:

$$\hat{S}_i \leftarrow (R_F \cdot S_i) + R_B$$
$$\hat{S}_j \leftarrow (R_F \cdot S_j) + R_B$$
$$\hat{S}_k \leftarrow (R_B \cdot S_k) + R_F$$
$$\hat{S}_l \leftarrow (R_B \cdot S_l) + R_F \quad (3)$$

Thus, for example, the collided bit $S_i$ is set high if the forward collision condition $R_F$ is not set and $S_i$ is one, or if there is a backward collision with the condition $R_B$ set.

Also, the system must provide for boundaries. A no-slip boundary condition may be provided by simply reversing the velocity vector of all particles striking the surface. The surface can be defined by a boundary bit B for each site through which the surface passes. Where there is a boundary bit, the above collision logic is suppressed and a parity vector particle is generated for each particle of the state vector. Where C is the logic of equation (3), the post collision state bits with boundary conditions is:

$$\hat{S} \leftarrow \left(C \cdot \overline{B}\right) + \left(PARITY \cdot B\right) \qquad (4)$$

The present invention has particular application to processing of fluid flow with high Reynolds numbers. The low viscosity required for the high Reynolds numbers is obtained by the great number of collisions performed at each site. In a real fluid, there would be many more particles than allowed by the limited lattice sites of the present system, but collisions are less efficient. For this system, the high efficiency of collisions compensates for the gain in viscosity resulting from the fewer number of particles. The present multiple speed approach substantially adds to the number of possible collisions and thus greatly reduces the viscosity of the system.

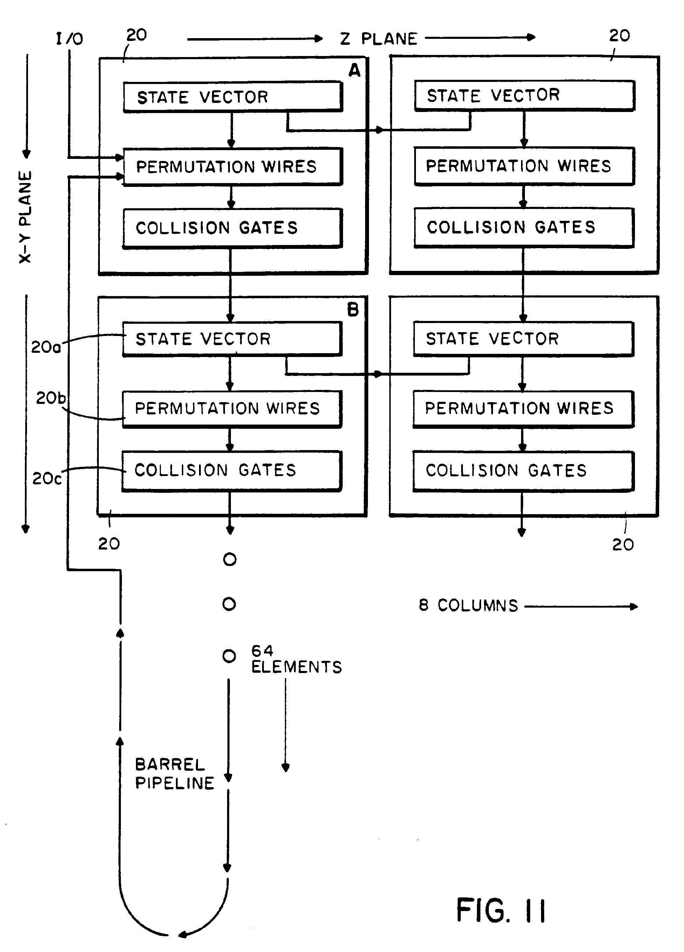

The data processing system in Figure 11 is comprised of a plurality of chips. Each chip processes state vectors associated with specific lattice sites in parallel. The state vectors are processed to simulate collisions as previously described and to move the particles between lattice sites. There is a mapping from the physical space on the chips into the lattice site spaces.

A typical chip is depicted in Figure 11. The chip is comprised of 8 columns wherein each column has 64 elements 20 and can be viewed as a large barrel pipeline. Each element 20 processes particle data for a particular lattice site in a cycle. Together, the elements of a pipeline perform the collisions for that given lattice site over the several machine cycles of a time step.

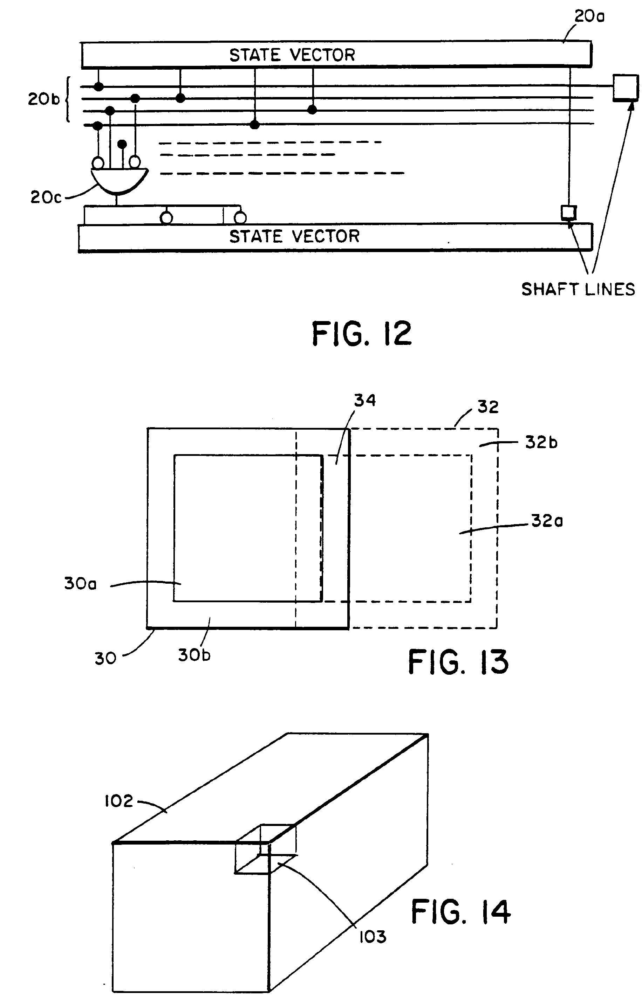

Each pipeline element 20 is comprised of a state vector 20a such as that shown in Figure 11. The collisions are performed by hardware comprised of permutation wires 20b and collision gates 20c. The permutation wires 20b establish appropriate permutations to obtain particle pairs and hole pairs. The collision gates 20c (see Figure 12), in contrast, perform the logical operations (e.g. AND, OR, etc.) necessary to effect the collisions according to equations 1, 2, 3 and 4. These collision gates 20c receive bits according to the particle pair selected and account for the energy transfer collisions by establishing appropriate particle pairs. The collision gates 20c are at most two logic gates deep of AND gates and OR gates. The permutation wires may be comprised of 54 horizontal wires that extend across all of the collision gates. In essence a wire is provided for each bit in the state vector and thus, each set of the collision gates has access to such bits. The pipeline is 64 elements. Thus, after 64 machine cycles the state vector corresponding to site A returns to element A. All state vectors are then in position for movement of individual bits along the lattice depending on the direction and energy of the particle represented by the bit.

As mentioned above, columns of the chip are comprised of 64 elements. The mapping from the physical space to the chips is such that each column constitutes an XY plane. The mapping begins with X and Y at 1. Y increases along the column until it reaches the value of 8 at which point the X value is incremented to 2. The subsequent columns constitute new Z planes of the physical volume space. Given the 64 pipeline elements 20 and the 8 columns, it is evident that 8x64 or 512 lattice sites are processed for each chip. The chips are arranged, for instance, into 8x8x8 cubes 103 of chips shown in Figure 14 which in turn are organized into a volume 102 of 100 cubes. More generally the chips are configured to handle 100 regions of fluid (where a region of fluid is handled by a 8x8x8 cube) that may be mapped to the processor blocks in many different ways. This configuration produces approximately $10^4$ chips per machine to give a raw process power of $9 \times 10^{15}$ bit operation per second. A volume of fluid to be processed is mapped into the volume 102 of processing elements.

Movement between lattice sites in adjacent columns is provided by shifting. In particular, an element of a state vector from a first column may be shifted to its corresponding pipeline element in the immediately adjacent column or chip. This ability to shift bits to an adjacent pipeline enables the movement stage of the system. Hence, particles may be moved from one state vector to another.

The system is designed so that each chip works according to a 30 megahertz clock. The chips take a maximum of 90 clock cycles to process lattice sites for a single time step of the simulation. It is preferred that there are approximately 200 data pins per chip. Given the 90 clock cycles to process the lattice sites for a single time step and the previously described raw processing ability, it is apparent that each chip can perform $10^8$ site updates per second.

The processing of a volume of fluid proceeds in a sequential manner. To illustrate how the system operates, an example mapping is illustrated in Figure 13. Suppose that a first volume of fluid 30 is processed initially in a 8X8 cube of chips 103 such as shown in Figure 14 for a given number of time steps. Since this volume 30 is processed in isolation, the particles located at the outer boundary of the volume will not be processed in a manner that accurately reflects their true behavior. The reason for this difficulty is that particles from other volumes that might collide with these boundary particles are not taken into account. As such, after several time steps, the volume 30 will be comprised of an inner volume of particles 30a that is correct and an outer volume 30b that is contaminated. The depth of the outer region 30b directly corresponds to the number of time steps because for each time step an external particle can affect one level of depth in the volume of fluid 30.

When the next volume of data 32 is processed, it is selected so that it overlaps with the region 30. It overlaps for a large enough extent to cover the contaminated region of volume 30. In particular, when the volume 32 is processed it will have an outer region 32b of contaminated data and an inner region 32a of proper data. This inner region 32a includes the region 34 of data that was previously contaminated for volume 30. The illustration in Figure 13 is shown strictly for a right side of the volume 30. The remaining sides of the contamination region 30b are corrected in similar fashion for subsequent volumes that are positioned to overlap those respective edges of the contaminated data 30b.

The system thus operates on each volume of the fluid in sequential order until all volumes have been properly processed. Once all of the volumes have been properly processed, the system begins again with the first volume for a new round of time steps. This process is repeated until the simulation is completed.

To initialize the above described process, each of the state vectors must be set for all of the lattice sites. This is done by software that assigns a value to each state vector. The user of the system must initialize the state vectors so as to accurately reflect the fluid to be modelled.

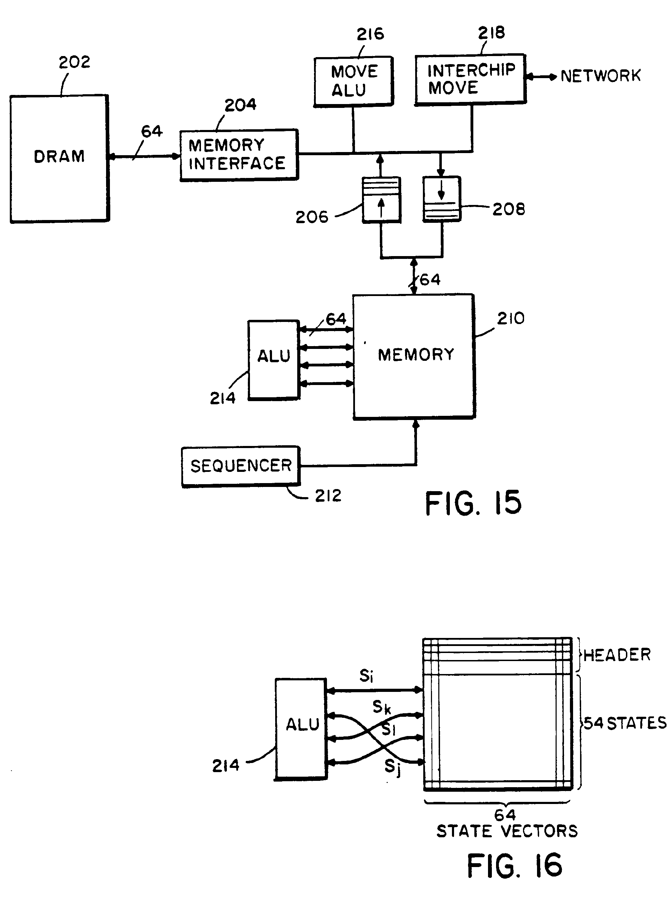

A second architecture for implementing the present invention is illustrated in Figures 15 and 16. Preferably, the system is a massively parallel processor system and Figure 15 illustrates one processor of the system. At each node of the processing system, multiple blocks of lattice sites are processed in series. In one implementation, the lattice space is divided into blocks of 4x4x4 = 64 sites. Many such blocks are stored in dynamic random access memory 202. The blocks of site data are fetched a 64 bit word at a time by memory interface 204 and applied through a FIFO 208 to a processing memory 210. After processing, a block is returned to DRAM 202 through FIFO 206.

A block of state vector data retrieved from DRAM 202 and held in processing memory 210 is as illustrated in Figure 16. A state vector of 54 bits is provided for each of the 64 lattice sites of the block. Additionally, header information which applies to the entire block is stored in a header. That header information may include masking information for each site, as well as diagnostic, statistical, geometric and fluid variable information for the block.

In the implementation shown, only one collision rule is processed at a time. However, to obtain significant parallelism in the ALU 214, the same collision is performed on each of the 64 sites simultaneously. Thus, the sequencer 212 selects the four states $S_i$, $S_j$, $S_k$ and $S_l$ required in a particular collision. Those state bits for all 64 sites are read simultaneously into the ALU. There, each set of four bits for each site is applied to a combinational logic unit which performs the logic of equations 1, 2, 3 and 4. The ALU includes 64 such combinational logic units operating in parallel. The outputs of that combinational logic are then read back into the memory 210. Then, the sequencer 212 selects a new set of four states so that the ALU can perform the next collision.

To provide additional throughput, more than four states may be selected at a time, and plural collisions may be performed simultaneously for all sites.

Once all collisions for a block have been performed, the move ALU 216 performs the move operation on the particle representations. Most of the moves need only be made within the block of 64 sites. Thus, most state bits, which do not change during the move operation, need only be shifted within the 64-bit word representing that state for all sites of the block. The shifting will differ between state bits, but will be the same for a single state throughout the 64 bit block. To simplify the shifting, the move ALU 216 may shift the bits within the 64-bit word sequentially in each of the x, y and z dimensions. Some bits must be shifted to other blocks handled by the processing node. Thus those bits must be stored by the move ALU 216 until the block into which they are being shifted is processed by the move ALU. Finally, a few bits must be shifted to blocks being processed by other nodes of the system. Those bits are transferred by interchip move circuitry 218 through the network.

As in the embodiment of Figures 11 and 12, this embodiment performs collisions by applying sets of four bits of a state vector, at a 3D lattice site, to combinational logic to generate post collision state bits. Because each collision is effected by proper selection of state bits applied to simple combinational logic which is consistent for all collisions at all sites for all time steps, the data can be processed thousands of times more rapidly than would be possible with a conventional programmed general purpose computer. In both systems, many collisions are performed at each site of a volume in each time step; thereafter the state bits are shifted to other sites according to the directions that they represent in order to effect particle movement.

In the first embodiment, the bits of the state vector applied to the combinational logic are selected by hardwired permutators, a set of permutators operating independently for each lattice site and selecting multiple collisions in parallel for the lattice site. In the second embodiment, the particle selection permutations are performed by the sequencer. The sequencer at a node selects the state bits required for only a single collision at a time but selects the bits of 64 sites for processing by the ALU in parallel. Since the sequencer is readily programmable, it provides great flexibility in size of the state vector and in the collision rules as is required for such modifications as additional energy levels. The shifting in the second embodiment is also programmable for greater flexibility.

In the second embodiment, blocks of site data are fetched sequentially from memory at each node, and an entire volume may be processed in a time step before a block is again fetched and processed. Therefore, the problem of contaminated regions as illustrated in Figure 13 does not occur.

With the second embodiment, systems with variable grid spacing can be simulated. Such a variable grid simulation is important to the accurate treatment of realistic high Reynolds number flows where very high resolution is required near the surface of objects. The interfaces between the differing grids require some extensions to the collision logic that follows the same general procedure as described for collisions above.

While this invention has been particularly shown and described with references to preferred embodiments thereof, it will be understood by those skilled in the art that various changes in form and details may be made therein without departing from the scope of the invention as defined by the appended claims. For example, the collision and move processes may be performed in a common unit. Further, the invention has application beyond fluid dynamics. It may be used whenever a physical process may be modeled as particle flow.

## Claims

1. A data processor for processing data of a plurality of sites of a lattice to simulate an interactive physical process across the lattice, the data processor comprising:

   storage means (20a,202,210) arranged to store particle representations of a set of particles associated with each of a plurality of sites of a lattice, the particle representations including a like set of bits representing particles at a site of the lattice;

   input means coupled to said storage means for receiving initial values of said particle representations;

   interaction processing means (20c,214) coupled to receive from said storage means the initial particle representations associated with each lattice site and to generate therefrom, in a time step, modified particle representations according to collision rules; and

   move processing means (216) operable to generate from said modified particle representations new initial particle representations which reflect movement of particles in the lattice to new sites and to cause said new particle representations to be stored in said storage means, whereby the next step taken by the interaction processing means is carried out on said new initial values, characterised in that the particle representations identify for each particle one of a plurality of possible energy states including states of moving particles and in that the storage means (20a,202) holds, at the beginning of a multicycle time step, an initial particle representation to be processed; and further characterised by selection means (20b,212) for selecting from the bits of the received particle representation different permutations of bits in successive cycles within a time step and logic means (20c,214) for carrying out combinational logic on those bits in each cycle according to said collision rules which include rules which reflect a transfer of energy between moving particles of different energy states, wherein bits selected for processing in each cycle may include bits modified by processing in prior cycles.

2. A data processor as claimed in claim 1 wherein the logic means comprises specialized combinational logic (20c,214) executing a rule applied to bits of a particle representation for each site of the lattice in each cycle of each time step.

3. A data processor as claimed in claim 2 wherein the combinational logic causes a collision when the particle representation indicates that all of selected colliding particles are present and that there are holes where all of selected collided particles are to be present after collision.

4. A data processor as claimed in any preceding claim wherein the Interaction processing means comprises means for transferring different rates of energy in one direction between energy states than in an inverse direction.

5. A data processor as claimed in any preceding claim wherein the particle representations define particles of different four-dimensional velocities.

6. A data processor as claimed in claim 5 wherein the sum over the directions of the four-fold tensor product of unit vectors in each energy level form a purely isotropic rank four tensor in each energy level such that the simulation is without discreteness artifacts.

7. A data processor as claimed in any preceding claim wherein the move processing means generates said new initial particle representations to reflect movement of particles on a non-uniform lattice grid.

8. A data processor as claimed in any preceding claim wherein the interaction processing means selects like bits of a plurality of sites of the lattice together and processes a common collision rule on all selected bits simultaneously.

9. A data processor as claimed in claim 8 wherein the selection means comprises a sequencer (212) for selecting a portion of the bits of particle representations.

10. A data processor as claimed in any preceding claim further comprising a masking input to the interaction procession means to prevent performance of collision rules.

11. A data processor as claimed in any preceding claim comprising a plurality of said interaction processing means in parallel.

12. A method of processing data of a plurality of sites of a lattice to simulate an interactive physical process across the lattice, the method comprising:
storing particle representations of a set of particles associated with each of a plurality of sites of a lattice, the particle representations including a like set of bits representing particles at a site of the lattice;
providing initial values of said particle representations;
processing, for each lattice site, the initial particle representations to generate therefrom, in a time step, modified particle representations according to collision rules;
generating from said modified particle representations new initial particle representations which reflect movement of particles in the lattice to new sites and storing said new particle representations, whereby the next processing step is carried out on said new initial values, characterised in that the particle representations identify for each particle one of a plurality of possible energy states including states of moving particles and in that the time step is a multicycle time step and further characterised by the steps of selecting from the bits of the initial particle representation to be processed different permutations of bits in successive cycles within a time step and processing those bits in each cycle according to said collision rules which include rules which reflect a transfer of energy between particles of different energy states, wherein bits selected for processing in each cycle may include bits modified by processing in prior cycles.

13. A method as claimed in claim 12 wherein the processing according to collision rules is performed in specialized combinational logic, the combinational logic allowing a collision when a state vector indicates that all of selected colliding particles are present and that there are holes where all of selected collided particles are to be present after the collision.

**14.** A method as claimed in claim 12 or 13 wherein the particle representation is processed to generate said modified particle representation wherein different rates of energy are transferred in one direction than in an inverse direction.

**15.** A method as claimed in claim 12, 13 or 14 further providing a masking input to prevent performance of a collision rule.

**16.** A method as claimed in any of claims 12 to 15 wherein the new initial particle representations are generated to reflect movement of particles on a non-uniform lattice.

**17.** A method as claimed in any of claims 12 to 16 wherein the processing according to collision rules comprises selecting like bits of a plurality of sites of the lattice together and processing a common collision rule on all selected bits simultaneously.

**18.** A method as claimed in claim 17 wherein bits are selected by a sequencer which selects a portion of the bits of particle representations.

**Patentansprüche**

**1.** Datenprozessor zum Verarbeiten von Daten einer Vielzahl von Plätzen eines Gitters zum Simulieren eines wechselwirkenden physikalischen Prozesses über das Gitter, wobei der Datenprozessor umfaßt:

ein Speichermittel (20a, 202, 210), das dazu eingerichtet ist, Teilchendarstellungen eines Satzes von Teilchen, die jedem von einer Vielzahl von Plätzen eines Gitters zugeordnet sind, zu speichern, wobei die Teilchendarstellungen einen gleichen Satz von Bits, die Teilchen an einem Platz des Gitters darstellen, umfassen;

ein an das Speichermittel gekoppeltes Eingabemittel zum Erhalten von Anfangswerten der Teilchendarstellungen;

ein Wechselwirkungs-Verarbeitungsmittel (20c, 214), das so gekoppelt ist, daß es von dem Speichermittel die jedem Gitterplatz zugeordneten Anfangs-Teilchendarstellungen erhalten und daraus in einem Zeitschritt modifizierte Teilchendarstellungen gemäß Kollisionsregeln erzeugt; und

ein Bewegungs-Verarbeitungsmittel (216), das so betreibbar ist, daß es aus den modifizierten Teilchendarstellungen neue Anfangs-Teilchendarstellungen, welche eine Bewegung von Teilchen in dem Gitter zu neuen Plätzen widerspiegeln, erzeugt und veranlaßt, daß die neuen Teilchendarstellungen in dem Speichermittel gespeichert werden, wodurch der nächste von dem Wechselwirkungs-Verarbeitungsmittel vorgenommene Schritt auf den neuen Anfangswerten ausgeführt wird, dadurch gekennzeichnet, daß die Teilchendarstellungen für jedes Teilchen einen von einer Vielzahl von möglichen Energiezuständen, einschließlich Zuständen sich bewegender Teilchen, identifizieren und daß das Speichermittel (20a, 202) zu Beginn eines Mehrfachzyklus-Zeitschrittes eine zu verarbeitende Anfangs-Teilchendarstellung gespeichert hält; und weiter gekennzeichnet durch ein Auswahlmittel (20b, 212), um von den Bits der erhaltenen Teilchendarstellung verschiedene Permutationen von Bits in aufeinanderfolgenden Zyklen innerhalb eines Zeitschrittes auszuwählen, und ein Logikmittel (20c, 214), um Kombinationslogik auf diesen Bits in jedem Schritt gemäß den Kollisionsregeln auszuführen, welche Regeln, die eine Energieübertragung zwischen sich bewegenden Teilchen verschiedener Energiezustände widerspiegeln, umfassen, wobei die Bits, die in jedem Zyklus zum Verarbeiten ausgewählt werden, Bits umfassen können, die durch Verarbeiten in vorherigen Zyklen modifiziert wurden.

**2.** Datenprozessor nach Anspruch 1, wobei das Logikmittel eine Spezial-Kombinationslogik (20c, 214) umfaßt, die eine Regel ausführt, welche auf Bits einer Teilchendarstellung für jeden Platz des Gitters in jedem Zyklus jedes Zeitschrittes angewendet wird.

**3.** Datenprozessor nach Anspruch 2, wobei die Kombinationslogik eine Kollision hervorruft, wenn die Teilchendarstellung anzeigt, daß alle ausgewählten kollidierenden Teilchen vorhanden sind und daß dort Löcher sind, wo alle ausgewählten kollidierenden Teilchen nach der Kollision vorhanden sein sollen.

**4.** Datenprozessor nach einem der vorhergehenden Ansprüche, wobei das Wechselwirkungs-Verarbeitungsmittel ein Mittel zum Übertragen von Energieraten, die in einer Richtung zwischen Energiezuständen anders als in einer inversen Richtung sind, umfaßt.

5. Datenprozessor nach einem der vorhergehenden Ansprüche, wobei die Teilchendarstellungen Teilchen verschiedener vierdimensionaler Geschwindigkeiten definieren.

6. Datenprozessor nach Anspruch 5, wobei die Summe über die Richtungen des vierfachen Tensorprodukts von Einheitsvektoren in jedem Energiezustand einen rein isotropen Tensor mit Rang Vier in jedem Energieniveau bilden, so daß die Simulation frei von Diskretisierungs-Artefakten ist.

7. Datenprozessor nach einem der vorhergehenden Ansprüche, wobei das Bewegungs-Verarbeitungsmittel die neuen Anfangs-Teilchendarstellungen erzeugt, um Bewegung von Teilchen auf einem nicht gleichförmigen Gitterraster widerzuspiegeln.

8. Datenprozessor nach einem der vorhergehenden Ansprüchen, wobei das Wechselwirkungs-Verarbeitungsmittel gleiche Bits einer Vielzahl von Plätzen des Gitters zusammen auswählt und eine gemeinsame Kollisionsregel auf allen ausgewählten Bits gleichzeitig bearbeitet.

9. Datenprozessor nach Anspruch 8, wobei das Auswahlmittel einen Sequenzer (212) zum Auswählen eines Teils der Bits von Teilchendarstellungen umfaßt.

10. Datenprozessor nach einem der vorhergehenden Ansprüche, weiter umfassend eine Maskierungseingabe an das Wechselwirkungs-Verarbeitungsmittel, um die Ausführung von Kollisionsregeln zu verhindern.

11. Datenprozessor nach einem der vorhergehenden Ansprüche, der eine Vielzahl der Wechselwirkungs-Verarbeitungsmittel in Parallelschaltung umfaßt.

12. Verfahren zum Verarbeiten von Daten einer Vielzahl von Plätzen eines Gitters zum Simulieren eines wechselwirkenden physikalischen Prozesses über das Gitter, wobei das Verfahren umfaßt:
Speichern von Teilchendarstellungen eines Satzes von Teilchen, die jedem von einer Vielzahl von Plätzen eines Gitters zugeordnet sind, wobei die Teilchendarstellungen einen gleichen Satz von Bits, die Teilchen an einem Platz des Gitters darstellen, umfassen;
Bereitstellen von Anfangswerten der Teilchendarstellungen;
Verarbeiten der Anfangs-Teilchendarstellungen für jeden Gitterplatz, um daraus in einem Zeitschritt modifizierte Teilchendarstellungen gemäß Kollisionsregeln zu erzeugen;
Erzeugen neuer Anfangs-Teilchendarstellungen aus den modifizierten Teilchendarstellungen, die eine Bewegung von Teilchen in dem Gitter zu neuen Plätzen widerspiegeln, und Speichern der neuen Teilchendarstellungen, wodurch der nächste Verarbeitungsschritt auf den neuen Anfangswerten ausgeführt wird, dadurch gekennzeichnet, daß die Teilchendarstellungen für jedes Teilchen einen von einer Vielzahl von möglichen Energiezuständen, einschließlich Zuständen sich bewegender Teilchen, identifizieren und daß der Zeitschritt ein Mehrfachzyklus-Zeitschritt ist, und weiter gekennzeichnet durch die Schritte eines Auswählens verschiedener Bitpermutationen von den Bits der zu verarbeitenden Anfangs-Teilchendarstellung in aufeinanderfolgenden Zyklen innerhalb eines Zeitschrittes und eines Verarbeitens dieser Bits in jedem Zyklus gemäß den Kollisionsregeln, welche Regeln umfassen, die eine Energieübertragung zwischen Teilchen verschiedener Energiezustände widerspiegeln, wobei die Bits, die zum Verarbeiten in jedem Zyklus ausgewählt werden, Bits umfassen können, die durch Verarbeiten in vorherigen Zyklen modifiziert wurden.

13. Verfahren nach Anspruch 12, wobei das Verarbeiten gemäß den Kollisionsregeln in Spezial-Kombinationslogik ausgeführt wird, wobei die Kombinationslogik eine Kollision erlaubt, wenn ein Zustandsvektor anzeigt, daß alle der ausgewählten kollidierenden Teilchen vorhanden sind und daß dort Löcher sind, wo alle ausgewählten kollidierenden Teilchen nach der Kollision vorhanden sein sollen.

14. Verfahren nach Anspruch 12 oder 13, wobei die Teilchendarstellung verarbeitet wird, um die modifizierten Teilchendarstellungen zu erzeugen, wobei andere Energieraten in einer Richtung übertragen werden als in einer inversen Richtung.

15. Verfahren nach Anspruch 12, 13 oder 14, weiter umfassend eine Maskierungseingabe, um die Ausführung von Kollisionsregeln zu verhindern.

16. Verfahren nach einem der Ansprüche 12 bis 15, wobei die neuen Anfangs-Teilchendarstellungen erzeugt werden, um Bewegung von Teilchen auf einem nicht gleichförmigen Gitterraster widerzuspiegeln.

17. Verfahren nach einem der Ansprüche 12 bis 16, bei welchem das Verarbeiten gemäß den Kollisionsregeln ein gemeinsames Auswählen gleicher Bits einer Vielzahl von Plätzen des Gitter und das Bearbeiten einer einer gemeinsamen Kollisionsregel auf allen ausgewählten Bits gleichzeitig umfaßt.

18. Verfahren nach Anspruch 17, wobei Bits durch einen Sequenzer ausgewählt werden, der einen Teils der Bits von Teilchendarstellungen auswählt.

## Revendications

1. Processeur de données pour traiter des données d'une pluralité de sites d'un réseau pour simuler un processus physique interactif à travers le réseau, le processeur de données comprenant:

des moyens de mémorisation (20a,202,210) adaptés à mémoriser des représentations de particules d'un ensemble de particules associées à chacun des sites d'une pluralité de sites d'un réseau, les représentations de particules comprenant un ensemble semblable de bits représentant des particules au niveau d'un site du réseau;

des moyens d'entrée connectés auxdits moyens de mémorisation pour recevoir des valeurs initiales desdites représentations de particules;

des moyens de traitement d'interaction (20c,214) connectés pour recevoir desdits moyens de mémorisation les représentations de particules initiales associées à chaque site du réseau, et pour générer à partir de cela, dans une étape de temps, des représentations de particules modifiées selon des lois de collision; et

des moyens de traitement de mouvement (216) adaptés à générer, à partir desdites représentations de particules modifiées, des nouvelles représentations de particules initiales qui reflètent le mouvement des particules dans le réseau vers de nouveaux sites, et à faire mémoriser lesdites nouvelles représentations de particules par lesdits moyens de mémorisation, de sorte que l'étape suivante exécutée par les moyens de traitement d'interaction se fait avec lesdites nouvelles valeurs initiales, caractérisé en ce que les représentations de particules identifient pour chacune des particules un état énergétique parmi une pluralité d'états énergétiques possibles comprenant des états de particules en mouvement et en ce que les moyens de mémorisation (20a, 202) conservent, au début d'une étape de temps multicycles, une représentation de particule initiale à traiter; et caractérisé, en outre, par des moyens de sélection (20b,212) pour sélectionner, parmi les bits des représentations de particules reçues, différentes permutations de bits dans des cycles successifs à l'intérieur d'une étape de temps, et par des moyens logiques (20c,214) pour exécuter une opération logique combinatoire à partir de ces bits conformément auxdites lois de collision qui comprennent des lois traduisant un transfert d'énergie entre particules en mouvement de différents niveaux d'énergie, des bits sélectionnés pour être traités dans chaque cycle pouvant comprendre des bits modifiés par traitement dans des cycles précédents.

2. Processeur de données selon la revendication 1, caractérisé en ce que les moyens logiques comprennent une logique combinatoire spécialisée (20c,214) exécutant une loi appliquée aux bits d'une représentation de particule pour chaque site du réseau dans chaque cycle de chaque étape de temps.

3. Processeur de données selon la revendication 2, caractérisé en ce que la logique combinatoire cause une collision lorsque les représentations de particules indiquent que toutes les particules entrant en collision sélectionnées sont présentes et qu'il y a des trous aux endroits où toutes les particules entrées en collision sélectionnées doivent être présentes après la collision.

4. Processeur de données selon l'une quelconque des revendications précédentes caractérisé en ce que les moyens de traitement d'interaction comprennent des moyens pour transférer des taux d'énergie différents dans une direction entre des niveaux d'énergie et dans une direction opposée.

5. Processeur de données selon l'une quelconque des revendications précédentes, caractérisé en ce que les représentations de particules définissent des particules de différentes vitesses à quatre dimensions.

6. Processeur de données selon la revendication 5, caractérisé en ce que la somme selon les directions du produit tensoriel quadruple de vecteurs unité dans chaque niveau d'énergie forme un tenseur de rang quatre purement isotrope dans chaque niveau d'énergie, de sorte que la simulation se fait sans artefacts de discontinuité.

7. Processeur de données selon l'une quelconque des revendications précédentes, caractérisé en ce que les moyens de traitement de mouvement génèrent lesdites nouvelles représentations de particules initiales pour refléter le mouvement de particules dans un réseau non-uniforme.

8. Processeur de données selon l'une quelconque des revendications précédentes, caractérisé en ce que les moyens de traitement d'interaction sélectionnent des bits semblables d'une pluralité de sites du réseau ensemble et exécutent une loi de collision commune sur tous les bits sélectionnés de manière simultanée.

9. Processeur de données selon la revendication 8 caractérisé en ce que les moyens de sélection comprennent un séquenceur (212) pour sélectionner une partie des bits de représentations de particules.

10. Processeur de données selon l'une quelconque des revendications précédentes comprenant en outre une entrée de masquage vers les moyens de traitement d'interaction pour empêcher l'exécution de lois de collision.

11. Processeur de données selon l'une quelconque des revendications précédentes comprenant une pluralité desdites moyens de traitement d'interaction en parallèle.

12. Procédé de traitement de données d'une pluralité de sites d'un réseau pour simuler un processus physique interactif à travers le réseau, le procédé comprenant les étapes suivantes:
    mémoriser des représentations de particules d'un ensemble de particules associées à chacun des sites d'une pluralité de sites d'un réseau, les représentations de particules comprenant un ensemble semblable de bits représentant des particules au niveau d'un site du réseau;
    fournir des valeurs initiales desdites représentations de particules;
    traiter, pour chaque site du réseau, les représentations de particules initiales pour générer à partir de cela, dans une étape de temps, des représentations de particules modifiées selon des lois de collision;
    générer, à partir desdites représentations de particules modifiées, des nouvelles représentations de particules initiales qui reflètent le mouvement des particules dans le réseau vers de nouveaux sites, et mémoriser lesdites nouvelles représentations de particules, de sorte que l'étape de traitement suivante est exécutée avec lesdites nouvelles valeurs initiales, caractérisé en ce que les représentations de particules identifient pour chaque particule un état énergétique parmi une pluralité d'états énergétiques possibles comprenant des états de particules en mouvement et en ce que l'étape de temps est une étape de temps multicycles, et caractérisé, en outre, par les étapes de sélection, parmi les bits des représentations de particules à traiter, de différentes permutations de bits dans des cycles successifs à l'intérieur d'une étape de temps, et de traitement de ces bits dans chaque cycle conformément auxdites lois de collision qui comprennent des lois traduisant un transfert d'énergie entre particules de différents niveaux d'énergie, des bits sélectionnés pour être traités dans chaque cycle pouvant comprendre des bits modifiés par traitement dans des cycles précédents.

13. Procédé selon la revendication 12, caractérisé en ce que le traitement suivant les lois de collision est réalisé par une logique combinatoire spécialisée, cette dernière permettant une collision lorsqu'un vecteur d'état indique que toutes les particules entrant en collision sélectionnées sont présentes et qu'il y a des trous aux endroits où toutes les particules entrées en collision sélectionnées doivent être présentes après la collision.

14. Procédé selon la revendication 12 ou 13, caractérisé en ce que la représentation de particule est traitée pour générer ladite représentation de particule modifiée, des taux d'énergie différents étant transférés dans une direction et dans une direction opposée.

15. Procédé selon la revendication 12, 13 ou 14 comprenant en outre une entrée de masquage pour empêcher l'exécution d'une loi de collision.

16. Procédé selon l'une quelconque des revendications 12 à 15, caractérisé en ce que les nouvelles représentations de particules initiales sont générées pour refléter le mouvement de particules dans un réseau non-uniforme.

17. Procédé selon l'une quelconque des revendications 12 à 16, caractérisé en ce que le traitement suivant les lois de collision comprend la sélection de bits semblables d'une pluralité de sites du réseau ensemble et le traitement par une loi de collision commune de tous les bits sélectionnés de manière simultanée.

18. Procédé selon la revendication 17 caractérisé en ce que les bits sont sélectionnés par un séquenceur qui sélectionne une partie des bits de représentations de particules.

3
(-1,-1,0,0)

5
(0,0,1,1)
(0,0,1,-1)

10a

3
(-1,0,1,0)

3
(0,1,1,0)

5
(-1,0,0,1)
(-1,0,0,-1)

3
(0,-1,1,0)

3
(-1,1,0,0)

5
(0,1,0,1)
(0,1,0,-1)

3
(-1,0,-1,0)

3
(1,0,1,0)

3
(0,1,-1,0)

5
(0,-1,0,1)
(0,-1,0,-1)

3
(1,1,0,0)

3
(1,-1,0,0)

3
(0,-1,-1,0)

3
(1,0,-1,0)

5
(1,0,0,1)
(1,0,0,-1)

5
(0,0,-1,1)
(0,0,-1,-1)

## FIG. 1a

9
(-1,-1,1,1)
(-1,-1,1,-)

7
(0,0,2,0)

7
(-2,0,0,0)

9
(-1,-1,-1,1)
(-1,1,1,-1)

10

9
(1,-1,1,1)
(1,-1,1,-1)

9
(1,1,1,1)
(1,1,1,-1)

7
(0,-2,0,0)

7
(0,2,0,0)

9
(-1,1,-1,1)
(-1,1,-1,-1)

9
(1,1,1,1)
(1,1,1,1)

7
(2,0,0,0)

7
(0,0,2,0)

9
(1,1,1,1)
(1,1,1,1)

FIG. 1b

19

$(\ 1,\ 1,\ 1,\ 1)$ $(-1,-1,-1,\ 1)$ $(\ 0,\ 0,\ 1,\ 1)$ $(\ 0,\ 0,-1,\ 1)$

$(\ 1,\ 1,\ 1,-1)$ $(-1,-1,\ 1,-1)$ $(\ 0,\ 1,\ 0,\ 1)$ $(\ 0,-1,\ 0,\ 1)$

$(\ 1,\ 1,-1,\ 1)$ $(-1,\ 1,-1,-1)$ $(\ 0,\ 1,\ 1,\ 0)$ $(\ 0,-1,\ 1,\ 0)$

$(\ 1,-1,\ 1,\ 1)$ $(-1,-1,-1,-1)$ $(\ 1,\ 0,\ 0,\ 1)$ $(-1,\ 0,\ 0,\ 1)$

$(-1,\ 1,\ 1,\ 1)$ $(\ 2,\ 0,\ 0,\ 0)$ $(\ 1,\ 0,\ 1,\ 0)$ $(-1,\ 0,\ 1,\ 0)$

$(\ 1,\ 1,-1,-1)$ $(-2,\ 0,\ 0,\ 0)$ $(\ 1,\ 1,\ 0,\ 0)$ $(-1,\ 1,\ 0,\ 0)$

$(\ 1,-1,\ 1,-1)$ $(\ 0,\ 2,\ 0,\ 0)$ $(\ 0,\ 0,-1,-1)$ $(\ 0,\ 0,\ 1,-1)$

$(-1,\ 1,\ 1,-1)$ $(\ 0,-2,\ 0,\ 0)$ $(\ 0,-1,\ 0,-1)$ $(\ 0,\ 1,\ 0,-1)$

$(-1,-1,\ 1,\ 1)$ $(\ 0,\ 0,\ 2,\ 0)$ $(\ 0,-1,-1,\ 0)$ $(\ 0,\ 1,-1,\ 0)$

$(-1,\ 1,-1,\ 1)$ $(\ 0,\ 0,-2,\ 0)$ $(-1,\ 0,\ 0,-1)$ $(\ 1,\ 0,\ 0,-1)$

$(\ 1,-1,-1,\ 1)$ $(\ 0,\ 0,\ 0,\ 2)$ $(-1,\ 0,-1,\ 0)$ $(\ 1,\ 0,-1,\ 0)$

$(\ 1,-1,-1,-1)$ $(\ 0,\ 0,\ 0,-2)$ $(-1,-1,\ 0,\ 0)$ $(\ 1,-1,\ 0,\ 0)$

# FIG. 2b

# FIG. 2a

EP 0 538 415 B1

$$1\begin{bmatrix}(0,\ 0,-1,\ 1)\\(0,\ 0,-1,-1)\end{bmatrix} \qquad 7\begin{bmatrix}(0,\ 0,-1,\ 1)\\(0,\ 0,\ 1,-1)\end{bmatrix} \qquad 1\begin{bmatrix}(1,\ 1,\ 1,\ 1)\\(-1,-1,-1,-1)\end{bmatrix} \qquad 7\begin{bmatrix}(1\ -1\ 1\ -1)\\(-1,\ 1,-1,\ 1)\end{bmatrix}$$

$$2\begin{bmatrix}(0,\ 1,\ 0,\ 1)\\(0,-1,\ 0,-1)\end{bmatrix} \qquad 8\begin{bmatrix}(0,-1,\ 0,\ 1)\\(0,\ 1,\ 0,-1)\end{bmatrix} \qquad 2\begin{bmatrix}(1,\ 1,\ 1,-1)\\(-1,-1,-1,\ 1)\end{bmatrix} \qquad 8\begin{bmatrix}(-1,\ 1,\ 1,-1)\\(1,-1,-1,\ 1)\end{bmatrix}$$

$$3\begin{bmatrix}(0,\ 1,\ 1,\ 0)\\(0,-1,-1,\ 0)\end{bmatrix} \qquad 9\begin{bmatrix}(0,-1,\ 1,\ 0)\\(0,\ 1,-1,\ 0)\end{bmatrix} \qquad 3\begin{bmatrix}(1,-1,\ 1,\ 1)\\(-1,-1,\ 1,-1)\end{bmatrix} \qquad 9\begin{bmatrix}(2,\ 0,\ 0,\ 0)\\(-2\ 0\ 0\ 0)\end{bmatrix}$$

$$4\begin{bmatrix}(1,\ 0,\ 0,\ 1)\\(-1,\ 0,\ 0,-1)\end{bmatrix} \qquad 10\begin{bmatrix}(-1,\ 0,\ 0,\ 1)\\(1,\ 0,\ 0,-1)\end{bmatrix} \qquad 4\begin{bmatrix}(1,-1,\ 1,\ 1)\\(-1,\ 1,-1,-1)\end{bmatrix} \qquad 10\begin{bmatrix}(0,\ 2,\ 0,\ 0)\\(0,-2,\ 0,\ 0)\end{bmatrix}$$

$$5\begin{bmatrix}(1,\ 0,\ 1,\ 0)\\(-1,\ 0,-1,\ 0)\end{bmatrix} \qquad 11\begin{bmatrix}(-1,\ 0,\ 1,\ 0)\\(1,\ 0,-1,\ 0)\end{bmatrix} \qquad 5\begin{bmatrix}(-1,\ 1,\ 1,\ 1)\\(1,-1,-1,-1)\end{bmatrix} \qquad 11\begin{bmatrix}(0,\ 0,\ 2,\ 0)\\(0,\ 0,\ 2,-0)\end{bmatrix}$$

$$6\begin{bmatrix}(1,\ 1,\ 0,\ 0)\\(-1,-1,\ 0,\ 0)\end{bmatrix} \qquad 12\begin{bmatrix}(-1,\ 1,\ 0,\ 0)\\(1,-1,\ 0,\ 0)\end{bmatrix} \qquad 6\begin{bmatrix}(1,\ 1,-1,-1)\\(-1,-1,\ 1,\ 1)\end{bmatrix} \qquad 12\begin{bmatrix}(0,\ 0,\ 0,\ 2)\\(0,\ 0,\ 0,-2)\end{bmatrix}$$

FIG. 3a

FIG. 3b

FIG. 4a

FIG. 4b

FIG. 5

( 1, 0, 1, 0 )

⌐( 1, 1, 0, 0 )
⌐(0,-1, 1, 0)

⌐( 1, 0, 0, 1 )
⌐( 0, 0, 1,-1 )

⌐( 1,-1, 0, 0 )
⌐(0, 1, 1, 0)

⌐( 1, 0, 0,-1 )
⌐(0, 0, 1, 1 )

## FIG. 6

| EQUIVALENCE CLASS | TYPE & ANGLE | NUMBER | DEGENERACY |
|---|---|---|---|
| 1 | 1 + 1 = 0, 180° | 12 X 1 | 12 |
| 2 | 1 + 1 = 2, 90° | 12 X 6 | 3 |
| 3 | 1 + 1 = 1, 120° | 12 X 8 | 4 |
| 4 | 1 + 1 = 3 | 12 X 8 | 1 |

## FIG. 7

FIG. 8a

FIG. 8b

FIG. 8c

FIG. 9a

FIG. 9b

FIG. 10

FIG. II

STATE VECTOR
20a

20b

20c

SHAFT LINES

FIG. 12

34
32
32b
32a
30a
30
30b

FIG. 13

102
103

FIG. 14

27

FIG. 15

FIG. 16